(19) **Europäisches Patentamt** / **European Patent Office** / **Office européen des brevets**

(11) **EP 2 881 616 B1**

(12) **FASCICULE DE BREVET EUROPEEN**

(45) Date de publication et mention de la délivrance du brevet: **07.03.2018 Bulletin 2018/10**

(51) Int Cl.: **F16F 13/08** *(2006.01)* **F16F 13/10** *(2006.01)*

(21) Numéro de dépôt: **14195930.4**

(22) Date de dépôt: **02.12.2014**

(54) **Dispositif antivibratoire hydroélastique comprenant du propanediol**

Hydroelastisches Gegenschwingungslager mit Propandiol

Shock load isolation mounting device with fluide comprising propanediol

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2013 FR 1362049**

(43) Date de publication de la demande:
**10.06.2015 Bulletin 2015/24**

(73) Titulaire: **SumiRiko SD France S.A.S.**
**58300 Decize Cedex (FR)**

(72) Inventeurs:
• **Stellato, Isabelle**
**58300 SAINT GERMAIN CHASSENAY (FR)**
• **Renard, Franck**
**58000 SAINT ELOI (FR)**
• **Sennepin, Sébastien**
**58390 DORNES (FR)**

(74) Mandataire: **Derambure, Christian et al**
**Ernest Gutmann-Yves Plasseraud SAS**
**3, rue Auber**
**75009 Paris (FR)**

(56) Documents cités:
**EP-A1- 2 343 464**    **EP-A1- 2 441 976**
**FR-A1- 2 660 720**    **US-B1- 7 788 808**

• **H. GEYER ET AL: "Measurement of densities and excess molar volumes for (1,2-ethanediol, or 1,2-propanediol, or 1,2-butanediol+ water) at the temperatures (278.15, 288.15, 298.15, 308.15, and 318.15) K and for (2,3-butanediol + water) at the temperatures (308.15, 313.15, and 318.15) K", THE JOURNAL OF CHEMICAL THERMODYNAMICS, vol. 32, no. 12, 12 décembre 2000 (2000-12-12), pages 1585-1596, XP055132278, ISSN: 0021-9614, DOI: 10.1006/jcht.2000.0679**
• **Y. TANAKA, K. OHTA, H. KUBOTA, T. MAKITA: "Viscosity of Aqueous Solutions of 1,2-Ethanedioland 1,2-Propanediol Under High Pressures", INTERNATIONAL JOURNAL OF THERMOPHYSICS,, vol. 9, no. 4, 4 mars 1988 (1988-03-04), pages 511-523, XP002728005,**

EP 2 881 616 B1

**Description**

La présente invention concerne de nouveaux dispositifs antivibratoires hydroélastiques et leurs applications.

Les dispositifs antivibratoires hydroélastiques sont bien connus dans l'état de la technique et sont employés notamment dans l'industrie automobile. Ils font l'objet de nombres de réalisations, telles que celles décrites dans les demandes de brevet FR2921706, EP941426, US2012/0318951, FR2954435 et FR2949144. Ces dispositifs servent habituellement à assembler deux pièces d'une structure et à amortir des vibrations transmises entre elles.

La présente invention concerne plus particulièrement la composition des liquides d'amortissement utilisés dans ces dispositifs. Des polyols ou des mélanges de polyols sont communément utilisés à cette fin, par exemple le Glykosafe 610-00® commercialisé par la société BASF, qui comprend 70 % en poids d'éthylène glycol.

Les liquides d'amortissement utilisables dans les dispositifs antivibratoires hydroélastiques doivent répondre à de nombreuses contraintes.

Ils doivent tout d'abord répondre à des contraintes techniques liées à leur utilisation et donc bien évidemment être fluides, et ceci dans une large gamme de températures négatives allant jusqu'à -30 °C et même -50 °C. Ils ne doivent pas cristalliser dans leurs conditions de conservation et d'utilisation. Ils ne doivent pas non plus s'évaporer trop rapidement. Ils doivent être compatibles avec les matériaux constitutifs des différents éléments du dispositif antivibratoire hydroélastique comme le caoutchouc vulcanisé, l'acier, l'acier zingué, l'aluminium, diverses matières plastiques.

En outre, ces dispositifs antivibratoires hydroélastiques ne doivent pas produire de bruit lors de leur sollicitation.

Ils doivent aussi être compatibles avec les différents appareils, machines, outillage et instruments nécessaires à la fabrication de dispositifs antivibratoires hydroélastiques, utilisant par exemple l'acier, diverses matières plastiques, le nitrile pour la réalisation de joints, l'acier inoxydable, des filtres des pompes etc.

Ils devraient tout autant répondre à des contraintes environnementales et de toxicité. Il convient en effet de penser à la fabrication des pièces dans les usines et à la sécurité du personnel. La fabrication des dispositifs antivibratoires hydroélastiques conduit à des rebuts de liquides de remplissage. En outre, en fin de leur fabrication, les dispositifs sont plongés dans des bains de lavage en vue de leur livraison. Il convient également de penser au recyclage des pièces en fin de vie. Le Glykosafe 610-00 ® à base d'éthylène glycol ne satisfait pas ce dernier critère car l'éthylène glycol est nocif et écotoxique.

Ainsi, il faut que le liquide d'amortissement réponde aux contraintes techniques énoncées ci-dessus et, simultanément satisfasse également les contraintes environnementales et de toxicité.

Le document EP2343464 porte sur un dispositif antivibratoire hydroélastique qui comprend une chambre contenant un mélange liquide d'amortissement L qui contient au moins un premier liquide L1 et un deuxième liquide L2 dont les pressions de vapeur respectives sont différentes, le premier liquide L1 ayant une pression de vapeur plus petite et le deuxième liquide L2 ayant une pression de vapeur plus grande, par exemple deux ou plusieurs fois plus grande. Le premier liquide L1 a une viscosité plus grande et le deuxième liquide L2 a une viscosité plus petite. Le mélange liquide L comporte une plus grande quantité en poids du premier liquide L1 et une plus petite quantité en poids du deuxième liquide L2. Les exemples du premier liquide L1 incluent les liquides contenant de l'éthylène glycol et du propylène glycol, ou simplement de l'éthylène glycol. Les exemples du deuxième liquide incluent l'eau. Dans le mélange liquide L, la teneur (en poids) du premier liquide L1 est comprise entre pas moins que 60% - et préférentiellement 80% - et pas plus que 99,9% - et préférentiellement 99% -. La teneur (en poids) du deuxième liquide L2 est comprise entre pas moins que 0,1% - et préférentiellement 1% - et pas plus que 40% - et préférentiellement 20% -.

Le document EP2441976 porte sur un dispositif antivibratoire hydroélastique du même genre avec un mélange liquide d'amortissement L qui contient un premier liquide L1 et un deuxième liquide L2.

Le document FR2660720 porte sur un dispositif d'amortissement de vibrations de type à manchon comportant un fluide qui, selon ce document, est de manière classique un mélange d'éthylène glycol et d'eau mais qui pourrait également être un mélange de propylène glycol et d'eau, sans plus d'information quant à leurs teneurs respectives.

L'on connaît également la publication de H. GEYER et al, dans THE JOURNAL OF CHEMICAL THERMODYNAMICS, vol.32, n°12, du 12 décembre 2000 concernant notamment la densité de systèmes glycol + eau et la publication de Y. TANAKA et al dans INTERNATIONAL JOURNAL OF THERMOPHYSICS, vol.9, n° 4 du 4 mars 1988.

Le document US7788808 porte sur un procédé et un dispositif destinés à un système ayant des vibrations problématiques, tel qu'un moteur. Il décrit un liquide de montage comprenant du glycol, préférentiellement de l'éthylène glycol ou du propylène glycol, et plus préférentiellement encore un mélange d'éthylène glycol et de propylène glycol. Préférentiellement, le liquide de montage a une viscosité inférieure à 100 centipoises, préférentiellement inférieure à 50 centipoises, plus préférentiellement inférieure à 30 centipoises.

Il résulte de la présentation de l'état de la technique qui vient d'être faite que les concepteurs de dispositifs antivibratoires hydroélastiques du type comprenant une chambre contenant un liquide d'amortissement, confrontés au problème de la composition d'un liquide d'amortissement qui réponde aux contraintes techniques, environnementales et de toxicité exposées plus haut, proposent chacun une composition propre. Celle-ci est de plus en plus sélective afin de tenir compte du niveau de plus en plus élevé des contraintes techniques, environnementales et de toxicité. Comme l'enseigne l'état de la technique, un tel liquide d'amortissement peut comprendre plusieurs liquides, d'un côté, de l'éthylène glycol, du propylène glycol, et de l'autre, de l'eau. Mais, chaque concepteur est amené à développer sa composition propre.

C'est dans ce contexte qu'après de longues recherches infructueuses, la demanderesse a découvert un liquide d'amortissement répondant à la plupart ou à la totalité des contraintes évoquées ci-dessus.

L'invention a pour objet un dispositif antivibratoire hydroélastique du type destiné à être interposé entre au moins deux pièces d'une structure, l'une étant mobile par rapport à l'autre, et permettant d'amortir les vibrations transmises entre lesdites pièces, ledit dispositif antivibratoire hydroélastique comportant:

- un premier moyen rigide destiné à être solidarisé à l'une des pièces de la structure et un deuxième moyen rigide destiné à être solidarisé à une autre pièce de la structure;
- un ensemble élastiquement déformable faisant ressort élastique disposé entre lesdits moyens rigides pour permettre un déplacement relatif entre lesdits moyens rigides, ledit ensemble étant conformé de manière à délimiter entre lesdits moyens rigides un volume étanche contenant un liquide d'amortissement susceptible de circuler dans ledit volume, qui comprend un premier liquide et un deuxième liquide.

Selon un premier aspect, et alors que le deuxième liquide est de l'eau, ce dispositif est tel que le liquide d'amortissement comprend comme premier liquide au moins 50 % en poids de propanediol et au plus 35 % en poids d'eau, les pourcentages étant exprimés par rapport à la composition totale du liquide d'amortissement.

Selon un mode de réalisation, le liquide d'amortissement comprend au moins 60 % en poids de propanediol, en particulier au moins 70 % en poids de propanediol, plus particulièrement au moins 80 % en poids de propanediol les pourcentages étant exprimés par rapport à la composition totale du liquide d'amortissement.

Selon un mode de réalisation, le liquide d'amortissement comprend au moins 50 % et au plus 60% en poids de propanediol.

Selon un mode de réalisation, le liquide d'amortissement comprend au moins 20 % et au plus 35% en poids d'eau.

Selon un mode de réalisation, le liquide d'amortissement est un mélange essentiellement constitué de propanediol et d'eau, dans lequel la proportion en eau n'excède pas 35 % en poids, en particulier n'excède pas 30 % en poids, plus particulièrement n'excède pas 25 % en poids, le pourcentage étant exprimé par rapport à la composition totale du liquide d'amortissement.

Selon un mode de réalisation, le propanediol est choisi parmi le propane-1,2-diol ou le propane-1,3-diol, ou un mélange de ceux-ci.

Selon un mode de réalisation, le liquide d'amortissement comprend en outre du glycérol.

Selon un mode de réalisation, la viscosité cinématique du liquide d'amortissement mesurée à 22°C est comprise entre 10 $mm^2.s^{-1}$ et 40 $mm^2.s^{-1}$, en particulier entre 10 $mm^2.s^{-1}$ et 35 $mm^2.s^{-1}$, plus particulièrement entre 10 $mm^2.s^{-1}$ et 30 $mm^2.s^{-1}$, encore plus particulièrement entre 10 $mm^2.s^{-1}$ et 25 $mm^2.s^{-1}$.

Selon un mode de réalisation, la densité du liquide d'amortissement est comprise entre 1 et 1,2, plus particulièrement entre 1 et 1,1.

Selon un deuxième aspect, et alors que le deuxième liquide est un solvant, ce dispositif est tel que le liquide d'amortissement comprend comme premier liquide au moins 50 % en poids de propanediol et comme deuxième liquide un solvant miscible au propanediol choisi de telle manière que la viscosité cinématique du liquide d'amortissement mesurée à 22°C soit comprise entre 10 $mm^2.s^{-1}$ et 40 $mm^2.s^{-1}$, en particulier entre 10 $mm^2.s^{-1}$ et 35 $mm^2.s^{-1}$, plus particulièrement entre 10 $mm^2.s^{-1}$ et 30 $mm^2.s^{-1}$, encore plus particulièrement entre 10 $mm^2.s^{-1}$ et 25 $mm^2.s^{-1}$.

Selon un mode de réalisation, le liquide d'amortissement comprend au plus 35% en poids d'eau, et préférentiellement au moins 20 % et au plus 35% en poids d'eau.

Selon un mode de réalisation, le liquide d'amortissement comprend au moins 60 % en poids de propanediol, en particulier au moins 70 % en poids de propanediol, plus particulièrement au moins 80 % en poids de propanediol, les pourcentages étant exprimés par rapport à la composition totale du liquide d'amortissement.

Selon un mode de réalisation, le liquide d'amortissement est un mélange essentiellement constitué de propanediol et dudit solvant.

Selon un mode de réalisation, le solvant du liquide d'amortissement est un solvant polaire choisi parmi l'eau ou un alcool, tel que l'éthanol.

Selon un mode de réalisation, le propanediol est choisi parmi le propane-1,2-diol ou le propane-1,3-diol, ou un mélange de ceux-ci.

Selon un mode de réalisation, le liquide d'amortissement comprend en outre du glycérol.

Selon un mode de réalisation, la densité du liquide d'amortissement est comprise entre 1 et 1,2, plus particulièrement entre 1 et 1,1.

Selon un troisième aspect, la présente invention a pour objet une pièce de liaison au sol pour véhicule automobile comprenant un dispositif antivibratoire hydroélastique selon l'invention.

On décrit maintenant brièvement les figures des dessins.

La figure 1 représente une vue schématique en coupe transversale d'un premier exemple de dispositif antivibratoire hydroélastique de l'invention.

La figure 2 représente une vue schématique en coupe transversale d'un deuxième exemple de dispositif antivibratoire hydroélastique de l'invention.

La figure 3 représente une vue schématique en coupe transversale d'un troisième exemple de dispositif antivibratoire hydroélastique de l'invention.

La figure 4 représente la courbe de raideur dynamique mesurée entre 0 Hz et 50 Hz p pour les compositions A à D selon l'invention et les compositions comparatives E à I.

K* = raideur dynamique(N/mm) et F = fréquence (Hz)

La figure 5 représente la courbe de phase mesurée entre 0 Hz et 50 Hz pour les compositions A à D selon l'invention et les compositions comparatives E à I.

P = angle de phase (°) et F = fréquence (Hz)

Ci-après un exposé détaillé de l'invention.

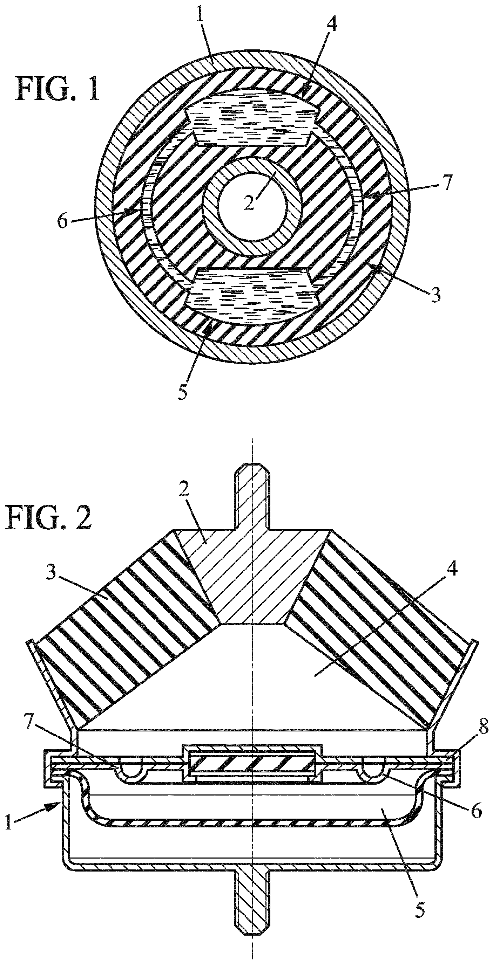

La figure 1 représente un premier mode de réalisation du dispositif antivibratoire hydroélastique selon l'invention.

Par référence à la figure 1, le dispositif antivibratoire hydroélastique comporte:

- un premier moyen rigide 1 (armature externe) et un deuxième moyen rigide 2 (armature interne) disposés l'un autour de l'autre;
- un ensemble élastiquement déformable 3 faisant ressort élastique disposé entre lesdits moyens rigides 1 et 2 pour permettre un déplacement relatif entre lesdits moyens rigides, ledit ensemble étant conformé de manière à délimiter entre lesdits moyens rigides un volume étanche 4, 5, 6, et 7, notamment tubulaire, contenant un liquide d'amortissement.

Les moyens rigides 1 et 2 sont cylindriques et généralement coaxiaux. L'ensemble élastiquement déformable 3 agit comme un ressort élastique.

Cet ensemble 3 est constitué par une masse de préférence en matériau élastomère au sein de laquelle sont ménagées deux cavités 4, 5. Ces deux cavités 4, 5 communiquent entre elles par deux conduits 6, 7. Les cavités 4, 5 et les conduits 6, 7 sont remplis de liquide d'amortissement de l'invention. Les conduits ont une section transversale faible par rapport à celle des deux cavités 4, 5.

Selon un autre mode de réalisation, les conduits 6 et/ou 7 sont réalisés en un composant supplémentaire pouvant être, par exemple du plastique ou de l'aluminium.

Selon un autre mode de réalisation tel que décrit dans la demande de brevet FR2949144, le dispositif antivibratoire hydroélastique comporte en outre une armature intermédiaire rigide disposée entre l'armature externe et l'armature interne, définissant ainsi un espace partiel interne et un espace partiel externe, l'ensemble élastiquement déformable 3 étant disposé dans l'espace partiel interne ou dans l'espace partiel externe.

Selon un autre mode de réalisation tel que décrit dans la demande de brevet FR2954435, l'élément élastiquement déformable 3 comporte une pluralité de chambres hydrauliques contenant ledit liquide, réparties à la périphérie intérieure de l'armature externe et communiquant entre elles. On utilisera par exemple deux rangées de chambres reliées par un seul passage ou par plusieurs passages de section réduite relativement à celles des chambres.

La figure 2 représente un autre mode de réalisation du dispositif antivibratoire hydroélastique selon l'invention tel que décrit dans la demande de brevet US2012/0318951. Ce dispositif est utilisé comme palier hydro-élastique pour une pièce de véhicule automobile, comme une unité de moteur pour être relié à la carrosserie d'un véhicule automobile.

Par référence à la figure 2, le dispositif antivibratoire hydroélastique comporte:

- un premier moyen rigide 1 et un deuxième moyen rigide 2;
- un ensemble élastiquement déformable 3 faisant ressort élastique disposé entre lesdits moyens rigides 1 et 2 conformé de manière à délimiter entre lesdits moyens rigides un volume étanche 4, 5, 6, et 7 contenant un liquide d'amortissement.

Le volume étanche est divisé en deux zones 4 et 5 à l'aide d'une plaque 8 qui comporte plusieurs canaux 6 et 7 permettent la circulation du liquide d'amortissement.

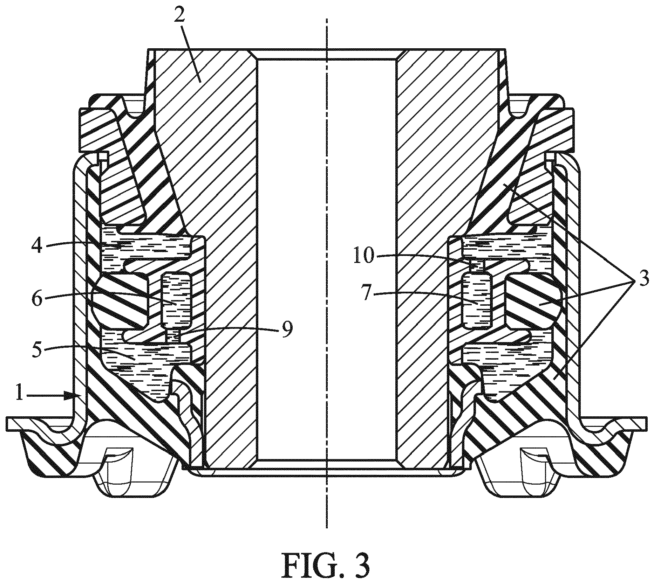

La figure 3 représente un autre mode de réalisation du dispositif antivibratoire hydroélastique selon l'invention.

Par référence à la figure 3, le dispositif antivibratoire hydroélastique comporte:

- un premier moyen rigide 1 et un deuxième moyen rigide 2;
- un ensemble élastiquement déformable 3 faisant ressort élastique disposé entre lesdits moyens rigides 1 et 2 conformé de manière à délimiter entre lesdits moyens rigides un volume étanche 4, 5, 6, 7, 9 et 10 contenant un liquide d'amortissement. Les volumes 4 et 5 s'étendent circonférentiellement autour du moyen rigide 2. Le liquide d'amortissement circule du volume 5 au volume 4 de la manière suivante : il passe par l'orifice 9 pour arriver dans le canal 6 qui, de façon circonférentielle autour du moyen 2 arrive dans le canal 7, puis passe par l'orifice 10, pour rejoindre le volume 4.

Le moyen rigide 1 et le moyen rigide 2 peuvent être réalisés en métal par exemple en acier, en aluminium, ou en matière plastique, par exemple en PA66 (polyamide 6.6), cette matière plastique étant éventuellement renforcée, notamment par des fibres. Les moyens rigides peuvent être réalisés dans des matériaux différents.

Comme cela est bien connu de l'état de la technique, par exemple du document FR2921706, les déplacements d'un moyen rigide par rapport à l'autre produisent des variations de volume des deux cavités 4 et 5 et en conséquence une circulation du liquide d'amortissement d'une cavité à l'autre par les conduits 6, 7, 9 et 10. Les vibrations transmises d'un moyen rigide à l'autre sont amorties grâce à l'effet d'inertie du liquide d'amortissement susceptible de circuler dans le dispositif.

On décrit maintenant le liquide d'amortissement plus en détail.

Le liquide d'amortissement comprend un premier liquide et un deuxième liquide, qui est un solvant miscible au premier.

En l'espèce, le premier liquide est un propanediol et le deuxième liquide peut être de l'eau ou bien un autre solvant miscible au propanediol.

Le liquide d'amortissement selon l'invention peut comprendre en l'espèce au moins 50 % et au plus 60% en poids de propanediol. Il peut comprendre au moins 20 % et au plus 35% en poids d'eau, les pourcentages étant exprimés par rapport à la composition totale du liquide d'amortissement.

Plus généralement, le liquide d'amortissement selon l'invention comprend au moins 50 % en poids de propanediol et au plus 35 % en poids d'eau, les pourcentages étant exprimés par rapport à la composition totale du liquide d'amortissement.

Le liquide d'amortissement peut en particulier comprendre au moins 60 % en poids de propanediol, plus particulièrement au moins 70 % en poids de propanediol, encore plus particulièrement au moins 80 % en poids de propanediol, les pourcentages étant exprimés par rapport à la composition totale du liquide d'amortissement.

En outre, le liquide d'amortissement peut comprendre d'autres composés, tels que le glycérol, ou bien des additifs tels que des colorants, inhibiteurs de corrosion, composants anti-mousse, ou fongicides.

Le propanediol peut être choisi parmi le propane-1,3-diol ou le propane-1,2-diol, ou un mélange de ceux-ci.

Les propanediols sont des produits peu toxiques. Outre la voie de synthèse chimique, des voies plus écologiques impliquant des bio-processus de certains micro-organismes peuvent être utilisées pour leur fabrication. On peut citer par exemple la fabrication du propane-1,3-diol par conversion du sirop de maïs à l'aide d'une souche génétiquement modifiée d'E. coli ou encore par conversion de la glycérine brute (un déchet de l'industrie du biodiesel) par utilisation de bactéries comme Clostridium diolis ou certaines entérobactéries. Les propanediols obtenus par des voies biologiques à partir de produits issus de végétaux, communément appelés « biosourcés » sont préférés. On peut citer par exemple le propan-1,3-diol tel que celui commercialisé par la société DuPont Tate & Lyle sous le nom commercial Susterra ® ou le propan-1,2-diol tel que celui commercialisé par la société Oleon sous le nom commercial Radianol 4713 ® qui est d'origine mixte (graisses animales et huiles végétales). Parmi les propanediol non biosourcés, on peut citer l'Ascagel MPG® commercialisé par la société Brenntag.

Selon un mode de réalisation, le liquide d'amortissement est un mélange essentiellement constitué de propanediol et d'eau, dans lequel la proportion en eau n'excède pas 35 % en poids, en particulier n'excède pas 30 % en poids, plus particulièrement n'excède pas 25 % en poids, le pourcentage étant exprimé par rapport à la composition totale du liquide d'amortissement.

Selon un mode de réalisation, la viscosité cinématique du liquide d'amortissement mesurée à 22°C est comprise entre 10 $mm^2.s^{-1}$ et 40 $mm^2.s^{-1}$, en particulier entre 10 $mm^2.s^{-1}$ et 35 $mm^2.s^{-1}$, plus particulièrement entre 10 $mm^2.s^{-1}$ et 30 $mm^2.s^{-1}$, encore plus particulièrement entre 10 $mm^2.s^{-1}$ et 25 $mm^2.s^{-1}$. La viscosité cinématique est mesurée selon la méthode décrite plus loin.

Selon un mode de réalisation, la densité du liquide d'amortissement est comprise entre 1 et 1,1. La densité est mesurée selon la méthode décrite plus loin.

Selon un deuxième aspect, le liquide, qui comprend un premier liquide et un deuxième liquide étant un solvant, est tel que le liquide d'amortissement comprend comme premier liquide au moins 50 % en poids de propanediol et comme deuxième liquide un solvant miscible au propanediol choisi de telle manière que la viscosité cinématique du liquide d'amortissement mesurée à 22°C soit comprise entre 10 mm$^2$.s$^{-1}$ et 40 mm$^2$.s$^{-1}$, en particulier entre 10 mm$^2$.s$^{-1}$ et 35 mm$^2$.s$^{-1}$, plus particulièrement entre 10 mm$^2$.s$^{-1}$ et 30 mm$^2$.s$^{-1}$, encore plus particulièrement entre 10 mm$^2$.s$^{-1}$ et 25 mm$^2$.s$^{-1}$.

Le liquide d'amortissement selon l'invention peut comprendre en l'espèce au moins 50 % et au plus 60% en poids de propanediol.

La viscosité cinématique à 22°C du propanediol est beaucoup plus élevée que celle du Glykosafe 610-00® : elle est de 42,5 mm$^2$.s$^{-1}$ pour l'Ascagel MPG ®, de 45.8 pour le Radianol 4713® et de 42,9 pour le Susterra ® contre 25 mm$^2$.s$^{-1}$ pour le Glykosafe®. Les inventeurs ont constaté que lorsque la viscosité du liquide d'amortissement est trop élevée, la réponse sur pièce est décalée : l'augmentation des pertes de charges induit un amortissement moindre et un décalage en fréquence sur la courbe d'amortissement. Le solvant contribue à diminuer cette viscosité afin d'atteindre une viscosité à 22°C comprise entre 10 mm$^2$.s-1 et 40 mm$^2$.s$^{-1}$.

Le solvant est choisi parmi les solvants miscibles au propanediol, c'est-à-dire les solvants capables de se mélanger avec le propanediol de façon à ne former qu'une seule phase.

Le solvant est de préférence choisi parmi les solvants dont la viscosité dynamique à 22 °C est comprise entre 1 mm$^2$.s$^{-1}$ et 2 mm$^2$.s$^{-1}$.

Selon un mode de réalisation, le solvant du liquide d'amortissement est un solvant polaire choisi parmi l'eau ou un alcool, tel que l'éthanol.

Dans une réalisation, le liquide d'amortissement comprend au plus 35% en poids d'eau, et préférentiellement au moins 20 % et au plus 35% en poids d'eau.

Le liquide d'amortissement peut en particulier comprendre au moins 60 % en poids de propanediol, plus particulièrement au moins 70 % en poids de propanediol, encore plus particulièrement au moins 80 % en poids de propanediol, les pourcentages étant exprimés par rapport à la composition totale du liquide d'amortissement.

Selon un mode de réalisation, le liquide d'amortissement est un mélange essentiellement constitué de propanediol et dudit solvant.

Selon un mode de réalisation, le propanediol est choisi parmi le propane-1,2-diol ou le propane-1,3-diol, ou un mélange de ceux-ci.

Comme mentionné précédemment, les propanediols obtenus par des voies biologiques à partir de produits issus de végétaux, communément appelés « biosourcés » sont préférés. On peut citer par exemple le propan-1,3-diol tel que celui commercialisé par la société DuPont Tate & Lyle sous le nom commercial Susterra ® ou le propan-1,2-diol tel que celui commercialisé par la société Oleon sous le nom commercial Radianol 4713 ®. Parmi les propanediol non biosourcés, on peut citer l'Ascagel MPG® commercialisé par la société Brenntag.

Outre le solvant et le propanediol, le liquide d'amortissement peut comprendre du glycérol.

Selon un mode de réalisation, la densité du liquide d'amortissement est comprise entre 1 et 1,1.

Selon un troisième aspect, la présente invention a pour objet une pièce pour véhicule automobile comprenant un dispositif antivibratoire hydroélastique selon l'invention.

Le liquide d'amortissement selon l'invention est préparé par mélange sous agitation des composés qui le constituent, à savoir le propanediol, l'eau ou le solvant miscible, et les autres additifs éventuels.

Le dispositif antivibratoire hydroélastique, objet de la présente invention, possède de très intéressantes propriétés et qualités. Comme tout dispositif anti vibratoire hydroélastique, il permet l'assemblage de deux pièces, une reliée à l'armature externe et une reliée à l'armature interne tout en conservant des possibilités de déplacement relatif entre elles et en amortissant les vibrations pouvant être transmises par l'une à l'autre. Le liquide d'amortissement joue un rôle prépondérant dans ces propriétés.

Le liquide d'amortissement est fluide, et ceci dans une large gamme de températures négatives allant jusqu'à -30 °C et même -50 °C. Ils ne cristallisent pas dans leurs conditions normales de conservation et d'utilisation. Ils ne s'évaporent pas trop rapidement.

Ils sont compatibles avec les matériaux constitutifs des différents éléments du dispositif antivibratoire hydroélastique dans lequel ils sont introduits et en particulier le caoutchouc vulcanisé, l'acier, l'acier protégé ou non contre la corrosion, l'aluminium, diverses matières plastiques.

Mis en oeuvre dans des dispositifs antivibratoires hydroélastiques, les liquides d'amortissement selon l'invention ne produisent pas de bruit.

Ils sont par ailleurs compatibles avec les différents appareils, machines, outillage et instruments nécessaires à la fabrication des dispositifs antivibratoires hydroélastiques, utilisant en particulier l'acier, diverses matières plastiques, l'acier inoxydable, le nitrile constituant les joints des pompes, les filtres des pompes de dosage et de remplissage.

Les liquides d'amortissement selon l'invention ne sont pas opaques, ce qui facilite le remplissage des pièces, et peuvent être stockés facilement sans faire appel à des bacs de rétention.

Par rapport aux liquides de l'Etat de la technique, notamment le Glykosafe® comprenant 70 % en poids d'éthylène glycol, les propanediols présentent l'avantage d'être considérablement moins toxiques et de pouvoir être préparés par des voies de synthèse écologiques impliquant des bio-processus de certains micro-organismes à partir de produits issus de végétaux, tels que le sirop de maïs ou la glycérine brute, un déchet de l'industrie du biodiesel. Ils sont par ailleurs disponibles à un prix équivalent au Glykosafe®, voire à un prix plus faible.

Ainsi, comme la fabrication des dispositifs antivibratoires hydroélastiques conduit inévitablement, comme toute fabrication industrielle à grande échelle, à des rebuts, ces pièces de rebut étant remplies de liquide d'amortissement, les rebuts sont plus faciles à recycler.

En outre, en fin de leur fabrication, les dispositifs antivibratoires hydroélastiques sont plongés dans des bains de lavage pour les nettoyer en vue de leur conditionnement et de leur livraison. Le propanediol présente l'avantage d'être non gras, ce qui facilite le nettoyage des pièces. Le recyclage est également amélioré. Et bien sûr, le recyclage des pièces en fin de vie est facilité.

Les propriétés des liquides d'amortissement selon l'invention sont illustrées ci-après dans la partie expérimentale. Elles justifient l'utilisation des liquides ci-dessus décrits à titre de liquide d'amortissement, ainsi que dans la fabrication de dispositifs antivibratoires hydroélastiques.

La présente invention trouve plus particulièrement une application dans le domaine des véhicules automobiles, en particulier en vue de la liaison au sol d'un tel véhicule. Notamment, un dispositif hydroélastique ci-dessus peut être installé dans un système de suspension. Il peut être installé à tout endroit d'un véhicule automobile nécessitant la filtration de vibrations, en particulier à l'extrémité d'un bras ou d'un triangle de suspension.

C'est pourquoi la présente demande a aussi pour objet une pièce pour véhicule automobile comportant un dispositif tel que décrit ci-dessus.

Les conditions préférentielles de mise en oeuvre des dispositifs ci-dessus décrites s'appliquent également aux autres objets de l'invention visés ci-dessus, notamment aux pièces de liaison au sol les mettant en oeuvre.

\* La densité du liquide d'amortissement ici mentionnée est mesurée à 22 °C à l'aide d'un densimètre automatique (densimètre DA 100M).

\* La viscosité cinématique du liquide d'amortissement ici mentionnée est mesurée selon la méthode suivante :

Appareillage :

Viscosimètre : ViscoClock SCHOTT®
Tube capillaire calibré : Ubberlhode ®
Thermomètre conforme aux normes ASTM
Poire manuelle de poussée
Bain thermostaté SCHOTT

Principe :

Le tube capillaire calibré est placé verticalement dans une cuve thermostatée. On introduit le fluide à étudier dans le réservoir du tube et on mesure le temps que met un volume du fluide contenu entre 2 repères pour s'écouler à travers le capillaire.

L'écoulement du fluide se fait sous une différence de pression constante due à la seule hauteur hydrostatique du fluide dans le capillaire. L'écoulement du fluide se fait à une température uniforme, fixée grâce au bain thermostaté.

Calcul :

$$\text{Viscosité cinématique (mm}^2\text{/s)} = K \times t$$

K = facteur du tube

t = moyenne des 3 temps de mesures en deuxièmees.

La méthode indiquée ci-dessus découle de la méthode de mesure décrite dans la norme NF EN ISO 3104 (1999) et des instructions d'utilisation des viscosimètres à capillaire en verre décrites dans la norme NF ISO 3105 (1996).

* Le test de compatibilité est réalisé de la manière suivante :

Différents composants (pièces du dispositif antivibratoire et matériaux des machines pour sa fabrication) sont placés dans un contenant neutre en verre et immergés dans le fluide à étudier. Le contenant reste fermé pendant 3 mois. Les composants sont les suivants:

- 1 corps moulé série comportant une armature interne en acier et une partie en caoutchouc (après traitement de surface et encollage),

- 2 canaux plastiques,

- 1 armature externe zinguée,

- 1 plaquette acier,

- 1 plaquette aluminium AU4G,

- 1 plaquette inox,

- 1 joint nitrile (épaisseur tore 3,6 mm, diamètre intérieur = 37mm).

Après 3 mois, le contenant est ouvert, puis on procède à une analyse visuelle immédiate des composants et du liquide pour juger d'éventuels changements d'aspect et de couleur ou d'attaques telles que la corrosion et de changements de dimension pour les canaux plastiques et le joint nitrile. Pour le joint nitrile, on apprécie également son élasticité, ainsi que l'absence de craquelure ou de rupture, en l'étirant manuellement. Les composants sont laissés 7 jours à l'air libre et l'analyse est reconduite au bout de ces 7 jours.

* Le niveau acoustique du liquide d'amortissement produit à 23 °C est déterminé par la méthode suivante :

On soumet le dispositif antivibratoire hydroélastique comprenant un liquide d'amortissement à une sollicitation pseudo-aléatoire issue d'un véhicule.
Cette sollicitation est traduite en un signal qui est joué en effort ou en déplacement sur une échelle temporelle (boucle).
Ce signal est envoyé sur un banc d'essai qui génère des frictions internes au sein du dispositif antivibratoire. Ces frictions internes sont susceptibles de générer du bruit selon le liquide d'amortissement utilisé.

* La raideur dynamique et l'angle de phase sont déterminés par un balayage fréquentiel sinusoïdal à amplitude constante sur une pré-charge statique fixée.

Exemple 1 : Liquides d'amortissement selon l'invention

On a réalisé des liquides d'amortissement selon l'invention ayant la composition pondérale suivante :
1. Composition A

| | |
|---|---|
| Propane-1,2-diol non biosourcé commercialisé sous la marque Ascagel MPG ® par Brenntag | 70 % |
| Eau | 30 % |

2. Composition B

| | |
|---|---|
| Propane-1,2-diol non biosourcé commercialisé sous la marque Ascagel MPG ® par Brenntag | 50 % |
| Mélange à base d'eau (environ 46% en poids), de glycérine et de propan-1,3 diol (environ 21 % en poids) commercialisé sous la marque Greenway® par SMB | 50 % |

3. Composition C

| Propane-1,3-diol biosourcé commercialisé sous la marque Susterra ® par Quimidroga | 80 % |
|---|---|
| Eau | 20 % |

4. Composition D

| Propane-1,2-diol biosourcé commercialisé sous la marque Radionol 4713 ® par Oléon | 80 % |
|---|---|
| Eau | 20 % |

Les compositions A, B, C et D ont toutes un point de congélation inférieur à - 30 °C.

Exemple 2 : Essais comparatifs

On a réalisé des liquides d'amortissement comparatifs, non conformes à l'invention, ayant les compositions pondérales suivantes :

1. Composition E

| Mélange à base d'éthylène glycol (70% en poids) commercialisé sous le nom Glykosafe 610-00® par BASF | 100 % |
|---|---|
| Eau | 0 % |

2. Composition F

| Mélange à base d'éthylène glycol (70% en poids) commercialisé sous le nom Glykosafe 610-00® par BASF | 50 % |
|---|---|
| Eau | 50 % |

3. Composition G

| Propane-1,2-diol non biosourcé commercialisé sous la marque Ascagel MPG ® par Brenntag | 100 % |
|---|---|
| Eau | 0 % |

4. Composition H

| Glycérine | 75 % |
|---|---|
| Eau | 25 % |

5. Composition I

| Mélange à base d'eau (environ 46% en poids), de glycérine et de propan-1,3 diol (environ 21 % en poids) commercialisé sous la marque Greenway® par SMB | 100 % |
|---|---|
| Eau | 0 % |

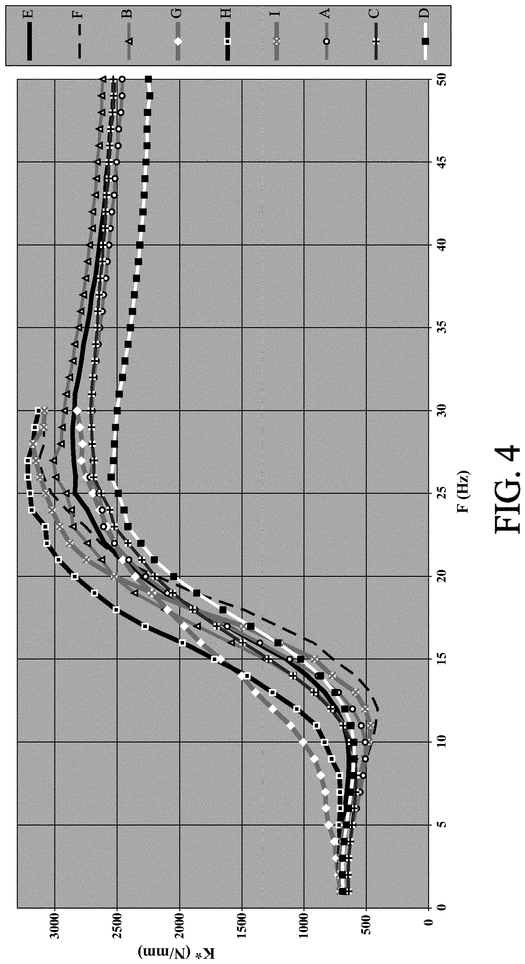

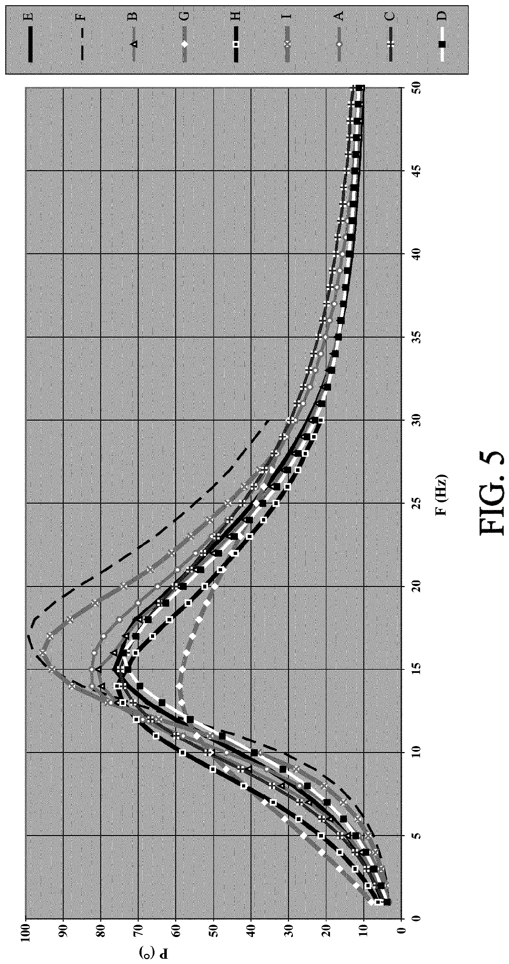

On a mesuré la densité à 22 °C et la viscosité cinématique à 22°C et à 40 °C pour chacune des compositions A à I, ainsi que le niveau acoustique produit à 23 °C, la raideur dynamique et l'angle de phase d'un dispositif antivibratoire hydroélastique comprenant lesdites compositions, selon les méthodes décrites précédemment. La raideur dynamique et l'angle de phase ont été mesuré entre 0 Hz +/- 0,1 mm et 50 Hz +/- 0,1 mm (courbes représentées respectivement sur les Figures 4 et 5).

On a également soumis les compositions A à I au test de compatibilité décrit précédemment.

La composition de référence de l'art antérieur est la composition E (Glykosafe 610-00®).

Les résultats obtenus pour les compositions A à D selon l'invention sont indiqués dans le tableau 1 :

Tableau 1

| | Composition | | | |
|---|---|---|---|---|
| | A | B | C | D |
| Densité à 22 °C | 1,04 | 1,08 | 1,05 | 1,04 |
| Viscosité cinématique à 40 °C ($mm^2.s^{-1}$) | 6,0 | 7,9 | 9,1 | 9,0 |
| Viscosité cinématique à 22 °C ($mm^2.s^{-1}$) | 12,3 | 17,1 | 16,7 | 18,6 |
| Niveau acoustique à 23 °C | 6,5 | 5 | 4 | 1,5 |
| Raideur moyenne à 25 Hz +/- 0,1 mm (N/mm) | 2598 | 2768 | 2603 | 2531 |
| Phase à 12 Hz+/-0,1 mm (°) | 61 | 70 | 67 | 60 |
| Test de compatibilité | Aucun changement sur les composants au bout de 3 mois en immersion et au bout de 7 jours à l'air libre. | | | |

Les résultats obtenus pour les compositions E à I comparatives sont indiqués dans le tableau 2 :

Tableau 2

| | Composition | | | | |
|---|---|---|---|---|---|
| | E | F | G | H | I |
| Densité à 22 °C | 1,09 | 1,06 | 1,04 | 1,20 | 1,10 |
| Viscosité cinématique à 40 °C ($mm^2.s^{-1}$) | 11,1 | 2,4 | 19,3 | 12,0 | 3,7 |
| Viscosité cinématique à 22 °C ($mm^2.s^{-1}$) | 25,0 | 3,9 | 42,5 | 24,0 | 5,1 |
| Niveau acoustique à 23 °C | 2 | 9 | 4 | 11 | 12 |
| Raideur moyenne à 25 Hz +/-0,1 mm (N/mm) | 2781 | 2987 | 2768 | 3118 | 3107 |
| Phase à 12 Hz+/-0,1 mm (°) | 61 | 59 | 58 | 70 | 67 |

Conclusions :

- Les compositions comparatives F, H et I produisent trop de bruit par rapport à la composition de référence E. En revanche, les compositions A à D selon l'invention ne produisent pas ou peu de bruit par rapport à la composition de référence E.

- La courbe de phase des compositions comparatives F, G, H, I est décalée par rapport à celle de la composition E de référence. En revanche, la courbe de phase des compositions A à D selon l'invention est similaire à celle de la composition E de référence.

- Les compositions E, F et G comparatives nécessitent un nettoyage des pièces lors du procédé de fabrication du dispositif antivibratoire.

- Les compositions E et F à base de Glykosafe 610-00® sont nocives et écotoxiques.

**Revendications**

1. Dispositif antivibratoire hydroélastique destiné à être interposé entre au moins deux pièces d'une structure, l'une étant mobile par rapport à l'autre, et permettant d'amortir les vibrations transmises entre lesdites pièces, ledit dispositif antivibratoire hydroélastique comportant:

- un premier moyen rigide (1) destiné à être solidarisé à l'une des pièces de la structure et un deuxième moyen rigide (2) destiné à être solidarisé à une autre pièce de la structure;
- un ensemble élastiquement déformable (3) faisant ressort élastique disposé entre lesdits moyens rigides (1, 2) pour permettre un déplacement relatif entre lesdits moyens rigides, ledit ensemble étant conformé de manière à délimiter entre lesdits moyens rigides un volume étanche (4, 5, 6, 7, 9, 10) contenant un liquide d'amortissement circulant dans ledit volume, qui comprend un premier liquide et de l'eau,

**caractérisé en ce que**:

- a/ le liquide d'amortissement comprend comme premier liquide au moins 50 % et au plus 60% en poids de propanediol choisi parmi le propane-1,2-diol ou le propane-1,3-diol, ou un mélange de ceux-ci, et au moins 20 % et au plus 35 % en poids d'eau, en particulier n'excède pas 30 % en poids, plus particulièrement n'excède pas 25 % en poids, les pourcentages étant exprimés par rapport à la composition totale du liquide d'amortissement,
- b/ le liquide d'amortissement comprend en outre du glycérol,
- c/ la viscosité cinématique du liquide d'amortissement mesurée à 22°C est comprise entre 10 $mm^2.s^{-1}$ et 40 $mm^2.s^{-1}$, en particulier entre 10 $mm^2.s^{-1}$ et 35 $mm^2.s^{-1}$, plus particulièrement entre 10 $mm^2.s^{-1}$ et 30 $mm^2.s^{-1}$, encore plus particulièrement entre 10 $mm^2.s^{-1}$ et 25 $mm^2.s^{-1}$,
- d/ la densité du liquide d'amortissement mesurée à 22°C est comprise entre 1 et 1,2, plus particulièrement entre 1 et 1,1.

2. Pièce pour véhicule automobile comprenant un dispositif antivibratoire hydroélastique selon la revendication 1.

**Patentansprüche**

1. Schwingungsdämpfende, hydroelastische Vorrichtung, die dazu bestimmt ist, zwischen mindestens zwei Teilen einer Struktur eingefügt zu werden, wobei ein Teil in Bezug auf das andere beweglich ist, und welche die zwischen besagten Teilen übertragenen Schwingungen dämpft, wobei besagte schwingungsdämpfende hydroelastische Vorrichtung folgendes umfasst:

- ein erstes starres Mittel (1), das dazu bestimmt ist, mit einem der Teile der Struktur fest verbunden zu werden, und ein zweites starres Mittel (2), das dazu bestimmt ist, mit einem anderen Teil der Struktur fest verbunden zu werden;
- eine elastisch verformbare Einheit (3), die als elastische Feder dient und zwischen besagten starren Mitteln (1,2) angeordnet ist, um eine relative Bewegung zwischen besagten starren Mitteln zu ermöglichen, wobei besagte Einheit so geformt ist, dass sie zwischen besagten starren Mitteln einen dichten Raum (4, 5, 6, 7, 9, 10) abgrenzt, welcher eine Dämpfungsflüssigkeit enthält, die in besagtem Raum fließt und aus einer ersten Flüssigkeit und Wasser besteht, **dadurch gekennzeichnet, dass**:
- a/ die Dämpfungsflüssigkeit als erste Flüssigkeit mindestens 50 % und höchstens 60 % des Gewichts an Propandiol enthält, das aus 1,2-Propandiol oder 1,3-Propandiol oder einer Mischung aus beiden ausgewählt wird, und mindestens 20 % und höchstens 35 % des Gewichts an Wasser, das insbesondere nicht über 30 % des Gewichts, und insbesondere nicht über 25 % des Gewichts hinausgeht, wobei die Prozentangaben in Bezug auf die Gesamtzusammensetzung der Dämpfungsflüssigkeit ausgedrückt werden,
- b/ die Dämpfungsflüssigkeit des Weiteren Glycerol enthält,
- c/ die bei 22°C gemessene kinematische Viskosität der Dämpfungsflüssigkeit zwischen 10 $mm^2.s^{-1}$ 1 und 40 $mm^2.s^{-1}$ umfasst, insbesondere zwischen 10 $mm^2.s^{-1}$ und 35 $mm^2.s^{-1}$, insbesondere zwischen 10 $mm^2.s^{-1}$ und 30 $mm^2.s^{-1}$ und insbesondere zwischen 10 $mm^2.s^{-1}$ und 25 $mm^2.s^{-1}$.
- d/ die bei 22°C gemessene Dichte der Dämpfungsflüssigkeit zwischen 1 und 1,2, insbesondere aber zwischen 1 und 1,1 liegt.

2. Teil für ein Kraftfahrzeug, welches eine schwingungsdämpfende hydroelastische Vorrichtung gemäß Anspruch 1 enthält.

**Claims**

1. A hydro-elastic vibration-damping device intended to be inserted between at least two parts of a structure, with one being movable relative to the other, and making it possible to dampen the vibrations transmitted between said parts, with said hydro-elastic vibration-damping device comprising:

   - first rigid means (1) intended to be secured to one of the parts of the structure and second rigid means (2) intended to be secured to another part of the structure;
   - an elastically deformable unit (3) acting as a resilient spring so positioned between said rigid means (1, 2) as to enable a relative movement between said rigid means, with said assembly being so shaped as to define, between said rigid means, a sealed space (4, 5, 6, 7, 9, 10) containing a damping fluid flowing through said volume, which comprises a first liquid and water,

   **characterized in that**:

   a/ the damping liquid comprises, as the first liquid, at least 50% and at most 60% by weight of propanediol selected from propane-1,2-diol or propane-1,3-diol, or a mixture thereof, and at least 20% and at most 35% by weight of water, in particular does not exceed 30% by weight, more preferably does not exceed 25% by weight, with the percentages being based on the total composition of the damping liquid,
   b/ the damping fluid further comprises glycerol,
   c/ the kinematic viscosity of the damping liquid as measured at 22°C ranges from $10mm^2.s^{-1}$ to $40mm^2.s^{-1}$, more particularly from $10mm^2.s^{-1}$ to $35mm^2.s^{-1}$, more preferably from $10mm^2.s^{-1}$ to $30mm^2.s^{-1}$, even more preferably from $10mm^2.s^{-1}$ to $25mm^2.s^{-1}$,
   d/ the density of the damping liquid as measured at 22°C ranges from 1 to 1.2, more particularly from 1 to 1.1.

2. A part for a motor vehicle comprising a hydro-elastic vibration-damping device according to claim 1.

FIG. 1

FIG. 2

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2921706
- EP 941426 A
- US 20120318951 A
- FR 2954435
- FR 2949144
- EP 2343464 A
- EP 2441976 A
- FR 2660720
- US 7788808 B

**Littérature non-brevet citée dans la description**

- **H. GEYER et al.** *THE JOURNAL OF CHEMICAL THERMODYNAMICS,* 12 Décembre 2000, vol. 32 (12
- **Y. TANAKA et al.** *INTERNATIONAL JOURNAL OF THERMOPHYSICS,* 04 Mars 1988, vol. 9 (4